# EUROPEAN PATENT APPLICATION

(11) **EP 4 803 886 A1**
(43) Date of publication of application: **09.09.2026**
(21) Application number: 25161466.5
(22) Date of filing: 04.03.2025
(51) Int. Cl.: G01N 21/64

(54) **AN OPTICAL SYSTEM FOR A FLUORESCENCE IMAGER**

(71) Applicant: Bioscience Media, SIA, 1002 Riga (LV)
(72) Inventor: Bankovskis, Pavels, LV-1002 Riga (LV)
(74) Representative: Fortuna, Jevgenijs

(57) **Abstract**

The present invention relates to optical imaging systems, specifically fluorescence imaging systems. An optical system for a fluorescence imager is disclosed, comprising a laser source (1) configured to generate a collimated excitation laser beam, a beam splitter (2) configured to receive the excitation laser beam and divide it into two substantially equal beams, and a receiving structure (3'') configured to accommodate a target vessel (3) configured to hold a target containing fluorophores. The system includes two substantially identical excitation systems (4', 4'') positioned symmetrically around the target vessel (3) on opposite lateral sides, ensuring uniform beam energy distribution across the target. Each excitation system (4', 4'') comprises a fiber optic cable (41) configured to transmit a focused beam, a first half-ball lens (42) configured to focus the beam into the fiber optic cable (41), a second half-ball lens (43) configured to recollimate the beam upon exiting the fiber optic cable (41), and a mirror (45) positioned at an angle (X) to direct the recollimated beam towards the target vessel (3), reflecting the beam at a total angle of approximately twice the mirror angle (2X). An imaging system (5) is configured to capture fluorescence emission from the target vessel (3) and includes an aperture (51), one or more optical filters (52', 52'') configured to attenuate excitation light, an imaging lens (53), and a photosensor (54) configured to capture fluorescence light emitted from the target. The optical filters (52', 52'') are positioned on opposite sides of the imaging lens (53), ensuring selective transmission of fluorescence emissions while blocking undesired excitation light. The system provides precise optical alignment, uniform energy distribution, and efficient fluorescence detection, enhancing imaging performance and signal clarity.

## Description

### Technical Field

The present invention relates to the field of optical imaging systems, specifically to fluorescence imaging systems employing laser excitation and beam-splitting techniques to achieve uniform illumination and reduced background noise, with applications in biological and chemical analysis.

### Prior Art

Fluorescence imaging is widely used in biological and chemical analysis for detecting and quantifying fluorescent markers in samples. Such imaging systems rely on the excitation of fluorophores within a sample using a specific wavelength of light, typically generated by a laser source. The fluorophores, upon excitation, emit light at a longer wavelength, which is then captured by an imaging system. However, achieving uniform excitation across the sample while minimizing background noise remains a critical challenge. Variations in illumination intensity can lead to inconsistent fluorescence signals, reducing the accuracy and reliability of the imaging results. Additionally, undesired reflections and scattered excitation light may enter the imaging system, further degrading image contrast and sensitivity.

Existing fluorescence imaging systems address these challenges using various optical components, such as beam splitters, filters, and specialized lens configurations. Some systems employ single-beam excitation, which often results in uneven energy distribution across the target, leading to non-uniform fluorescence intensity. Others utilize multiple excitation beams but face difficulties in precisely aligning and balancing the energy distribution. Moreover, many conventional systems (e.g. confocal fluorescence imaging systems) struggle with suppressing reflected excitation light, which can introduce unwanted background noise, limiting the system's ability to detect weak fluorescence signals. Despite advancements in optical design, there remains a need for an improved fluorescence imaging system that ensures uniform excitation, minimizes background interference, and enhances overall imaging sensitivity.

There are known fluorescence imaging systems that utilize laser excitation and beam-splitting techniques to enhance illumination uniformity and image quality. For example, [1] discloses an apparatus and method for fluorescence imaging that uses radiofrequency multiplexed excitation with an acousto-optic deflector to generate frequency-shifted beams. A first optical apparatus directs these beams along separate paths, while a second optical apparatus combines and directs them onto a flow channel. A photodetector captures fluorescence signals and analyzes beat frequencies for imaging, enabling high-speed detection of samples, such as cells in a microfluidic channel. A processor applies Fast Fourier Transform techniques for signal separation and image reconstruction. While this system enhances scanning speed and spectral resolution, it does not ensure uniform excitation energy distribution or mitigate background noise from reflected excitation light.

Another known system, [2], describes a fluorescence imaging system that uses a polarizing beam splitter to selectively direct excitation light and separate fluorescence emission based on polarization states. The system includes an illumination source that emits a beam along a first optical path, which is then filtered and polarized before reaching the sample. The emission light from the fluorescing sample travels along a second optical path, where the beam splitter transmits only the orthogonally polarized fluorescence to a detector, minimizing interference from residual excitation light. Additional polarizers and filters further refine the excitation and emission light paths to improve contrast. Some configurations integrate birefringent elements, liquid crystal modulators, or spectrometers for wavelength selection and polarization-based image enhancement. While this system reduces background noise and enhances fluorescence signal detection, it does not address challenges related to uniform energy distribution across the target or effectively mitigating scattered excitation light that could impact imaging sensitivity.

Furthermore, [3] discloses a fluorescence imaging system integrated into a video endoscope, featuring a beam splitter that directs excitation light into two optical paths for simultaneous acquisition of fluorescence and white light images. The system consists of an elongate shaft with a video camera at its distal end, which includes an objective lens system and an image acquisition system. The beam splitter divides the incoming light into two optical paths, directing one towards a first imaging chip for white light imaging and the other towards a second imaging chip for fluorescence detection. In some configurations, the beam splitter incorporates a wavelength-selective filter, such as a dichroic mirror, to separate visible and infrared light. The first imaging chip may use color filters in a Bayer pattern, while the second imaging chip is often monochromatic with a larger pixel size to enhance sensitivity. While this system improves the efficiency of capturing both imaging modes, it does not focus on ensuring uniform excitation light distribution or minimizing background noise from reflected excitation light, which remain challenges in fluorescence imaging.

Despite advancements in optical design, there remains a need for an improved fluorescence imaging system that ensures uniform excitation, minimizes background interference, and enhances overall imaging sensitivity.

### Brief Disclosure of the Invention

The aim of the invention is to provide an optical system for a fluorescence imager that ensures uniform and efficient excitation of fluorophores within a target vessel while minimizing background noise. The system comprises a laser source configured to generate a collimated excitation laser beam; a beam splitter configured to receive the excitation laser beam and divide it into two substantially equal beams: one and two; a receiving structure configured to accommodate a target vessel configured to hold a sample containing fluorophores; two substantially identical excitation systems, positioned symmetrically around the target vessel on opposite lateral sides, ensuring uniform beam energy distribution across the target. The optical system further comprises an imaging system configured to capture fluorescence emission from the target vessel.

Each excitation system comprising: a fiber optic cable configured to transmit a focused beam; a first half-ball lens configured to focus the beam into the fiber optic cable; a second half-ball lens configured to recollimate the beam one upon exiting the fiber optic cable; and a mirror positioned at an angle X to direct the recollimated beam towards the target vessel containing the target. The mirror is positioned to reflect the beam at a total angle of approximately 2X to prevent reflected excitation light from entering an imaging system's light path, thereby reducing background noise.

The imaging system comprising: an aperture; one or more optical filters configured to attenuate excitation light; an imaging lens; and a photosensor configured to capture fluorescence light emitted from the target. The optical filters having the same physical dimensions and optical properties and positioned on opposite sides of the imaging lens. The optical filters can be configured to selectively transmit fluorescence emissions at different wavelengths, enhancing applicability of the device in multi-wavelength fluorescence imaging.

The system may further be optimized for adjustability and modularity, allowing precise focus control along a linear axis (Z-axis) to accommodate various sample types and vessel configurations. The optical filters within the imaging system are interchangeable. Additionally, the invention supports a broad range of fiber optic specifications, ensuring compatibility with different excitation sources and experimental setups. By integrating these features, the invention provides a highly efficient, adaptable, and precise fluorescence imaging system, addressing the limitations of existing technologies.

### Brief Description of Drawings

Fig. 1 illustrates a portion of the optical system for a fluorescence imager, including a laser source, a beam splitter, two fiber optic cables, and two half-ball lenses.
Fig. 2 illustrates the excitation system and the imaging system of the optical system for a fluorescence imager.
Fig. 3 illustrates the imaging system, a portion of the excitation system, and a target vessel, along with the optical path of a laser beam and its interaction with a photosensor within the optical system for a fluorescence imager.
Fig. 4 - illustrates an embodiment where multiple lasers emit excitation beams at different wavelengths, which are merged by an optical combining element into a single, coaxial, multi-wavelength beam before entering the beam splitter.
Fig. 5 - illustrates an embodiment of the imaging system, including an adjustment mechanism for moving the imaging lens and/or photosensor along the Z-axis, and a filter mounting mechanism for interchangeable optical filters.

### Detailed Description of the Invention

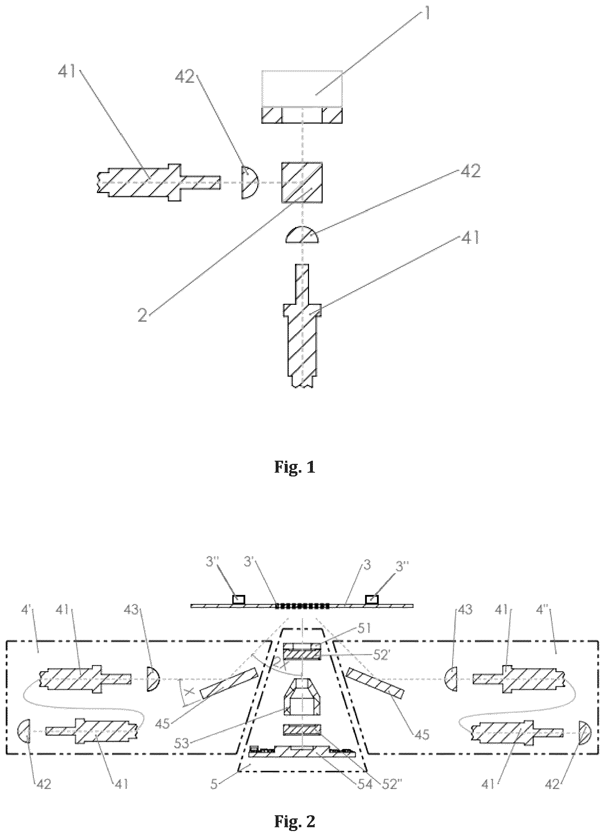

As shown in Fig. 1, the proposed optical system for a fluorescence imager, comprises: (i) a laser source 1 configured to generate a collimated excitation laser beam; (ii) a beam splitter 2 (e.g. a beam splitter cube) configured to receive the excitation laser beam and divide it into two substantially equal beams: one and two; (iii) a receiving structure (3") configured to accommodate a target vessel 3 (Fig. 2-3), e.g. a microtiter plate, a microscopic glass, or nitrocellulose slides, configured to hold a sample containing fluorophores; (iv) two substantially identical excitation systems 4' and 4" (Fig. 2), positioned symmetrically on opposite sides of the target vessel 3 to ensure uniform beam energy distribution across the target 3' comprising fluorophores, (v) an imaging system 5 configured to capture fluorescence emission from the target vessel 3.

Each excitation system 4' and 4" (Fig. 2) comprises: (iva) a fiber optic cable 41 configured to transmit a focused beam; (ivb) a first half-ball lens 42 configured to focus the beam into the fiber optic cable 41 (the lens 42 is positioned at a predefined distance from the fiber optic cable 41); (ivc) a second half-ball lens 43 configured to recollimate the beam one upon exiting the fiber optic cable 41 (the lens 43 is positioned at substantially the same distance from the fiber optic cable 41 as the first half-ball lens 42); and (ivd) a mirror 45 positioned at an angle X to direct the recollimated beam towards the target vessel 3 containing the target 3'.

According to the preferred embodiment, the distance between a flat surface of the half-ball lens 42 and a flat surface of the fiber optic cable 41 is 4-7 mm

The mirror 45 is positioned to reflect the beam at a total angle of approximately 2X to prevent reflected excitation light from entering an imaging system's light path, thereby reducing background noise. The preferred angle X is between 15° and 40°, resulting in a total reflection angle of 30° to 80°.

The imaging system 5 (Fig. 2) comprises: (va) an aperture 51; (vb) one or more optical filters 52' and 52" configured to attenuate excitation light, the filters 52' and 52" having the same physical dimensions and optical properties; (vc) an imaging lens 53; and (vd) a photosensor 54 configured to capture fluorescence light emitted from the target 3'. The photosensor 54 preferably comprises a CMOS or a CCD matrix.

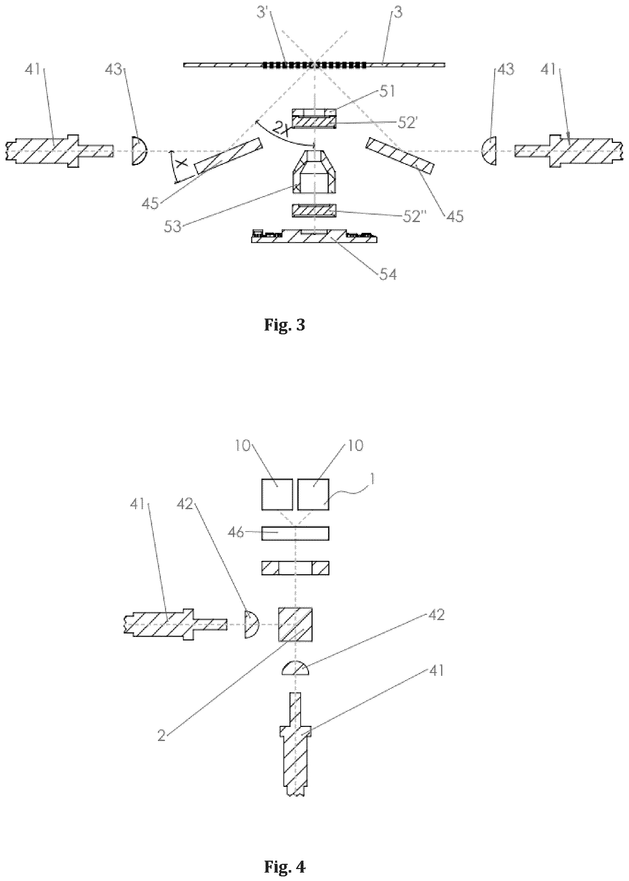

According to the preferred embodiment, the laser source 1 comprises two or more lasers 10 configured to emit excitation laser beams at different wavelengths, wherein the lasers 10 are positioned such that their emitted beams are directed along intersecting optical paths and are subsequently merged by an optical combining element 46 into a single, coaxial, multi-wavelength excitation beam before entering the beam splitter 2 (Fig. 4). The optical combining element 46 can be a dichroic mirror, a beam-splitting prism, or a wavelength-selective optical coupler, depending on the specific wavelength combination and system requirements.

According to another preferred embodiment, the laser source 1 configured to emit excitation laser beams at wavelengths in the ranges of approximately 300-700 nm, including green (520-560 nm), red (620-750 nm), blue (450-495 nm), violet (400-450 nm) un ultraviolet (300-400), with a power not exceeding 3 W per beam.

According to yet another preferred embodiment, each excitation system 4' and 4" is configured to generate a circular illumination spot with substantially uniform intensity distribution across its surface, the spot increasing in diameter with distance from the second half-ball lens 43.

The aperture 51 has, preferably, a diameter between 4 mm and 8 mm; and the optical filters 52' and 52" are single or multi-bandpass filters with a diameter between 7 mm and 15 mm. The optical filters 52' and 52" can be selected to transmit fluorescence emissions at different wavelengths.

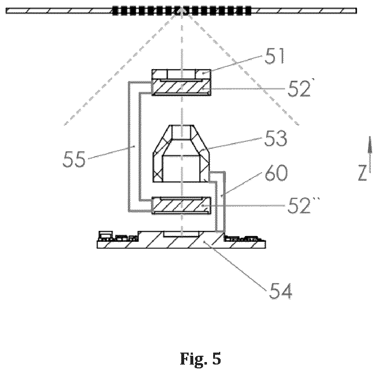

According to yet another embodiment, the imaging system 5 comprises an adjustment mechanism 60 that allows movement of the imaging lens 53 and/or photosensor 54 along the linear axis Z, which substantially perpendicular to the plane of the target vessel 3 to bring the image of the target 3' into focus on the photosensor 54 (Fig. 5).

According to yet another embodiment the imaging system 5 comprises a filter mounting mechanism 55 for interchangeable optical filters 52', 52" configured to allow easy replacement and alignment of filters for selecting specific fluorescence emission wavelengths (Fig. 5).

The fiber optic cable 41 can be a single-mode or multi-mode, and have a core diameter between 10 µm and 2000 µm, a numerical aperture between 0.1 and 0.5, and a transmission bandwidth between 250 nm and 2000 nm.

The disclosed optical system integrates multiple arranged components to achieve enhanced performance in fluorescence imaging. By combining structured excitation beam delivery, optical alignment, and controlled detection pathways, the system ensures both uniform energy distribution and effective suppression of unwanted background signals. The configuration of excitation elements and imaging components allows for precise control over light propagation, contributing to improved signal clarity and reliability.

### References

[1] US 10,408,758 B2.
[2] US 5,943,129 A.
[3] US 2024/0285155 A1.

## Claims

1. An optical system for a fluorescence imager, comprising: (i) a laser source (1) configured to generate a collimated excitation laser beam; (ii) a beam splitter (2) configured to receive the excitation laser beam and divide it into two substantially equal beams: one and two; (iii) a receiving structure (3") configured to accommodate a target vessel (3) configured to hold a target (3') containing fluorophores; (iv) two substantially identical excitation systems (4' and 4"), positioned symmetrically around the target vessel (3) on opposite lateral sides, ensuring uniform beam energy distribution across the target (3'), wherein each excitation system (4' and 4") comprising: (iva) a fiber optic cable (41) configured to transmit a focused beam; (ivb) a first half-ball lens (42) configured to focus the beam into the fiber optic cable (41), wherein the lens (42) is positioned at a predefined distance from the fiber optic cable (41); (ivc) a second half-ball lens (43) configured to recollimate the beam one upon exiting the fiber optic cable (41), wherein the lens (43) is positioned at substantially the same distance from the fiber optic cable (41) as the first half-ball lens (42); and (ivd) a mirror (45) positioned at an angle X to direct the recollimated beam towards the target vessel (3) containing the target (3'); wherein the mirror (45) is positioned to reflect the beam at a total angle of approximately 2X; (v) an imaging system (5) configured to capture fluorescence emission from the target vessel (3), the imaging system (5) comprising: (va) an aperture (51); (vb) one or more optical filters (52' and 52") configured to attenuate excitation light, the filters (52' and 52") having the same physical dimensions and optical properties; (vc) an imaging lens (53); and (vd) a photosensor (54) configured to capture fluorescence light emitted from the target (3'); the optical filters (52' and 52") positioned on opposite sides of the imaging lens (53).

2. The optical system of claim 1, wherein the laser source (1) comprises two or more lasers (10) configured to emit excitation laser beams at different wavelengths, wherein the lasers (10) are positioned such that their emitted beams are directed along intersecting optical paths and are subsequently merged by an optical combining element (46) into a single multi-wavelength excitation beam before entering the beam splitter (2).

3. The optical system of claim 2, wherein the laser source (1) configured to emit excitation laser beams at wavelengths in the ranges of approximately 400-700 nm, including green wavelengths from 520 to 560 nm, red wavelengths from 620 to 750 nm, blue wavelengths from 450 to 495 nm, violet wavelengths from 400 to 450 nm, and ultraviolet wavelengths from 300 to 400 nm, with a power not exceeding 3 W per beam.

4. The optical system of any preceding claims, wherein the angle X is between 15° and 40°, resulting in a total reflection angle of 30° to 80°.

5. The optical system of any preceding claim, wherein each excitation system (4' and 4") is configured to produce a uniformly illuminated circular spot with substantially equal intensity across its surface, the spot increasing in diameter with distance from the second half-ball lens (43).

6. The optical system of any preceding claims, wherein the aperture (51) has a diameter between 4 mm and 8 mm; and the optical filter (52' and 52") are single or multi-bandpass filters with a diameter between 7 mm and 15 mm.

7. The optical system of any of the preceding claims, wherein the imaging system (5) comprises an adjustment mechanism (60) that allows movement of the imaging lens (53) and/or the photosensor (54) along the linear axis Z, which substantially perpendicular to the plane of the target vessel (3).

8. The optical system of any preceding claims, wherein the photosensor (54) comprises a CMOS or a CCD matrix.

9. The optical system of any preceding claims, wherein the imaging system (5) comprises a filter mounting mechanism (55) for interchangeable optical filters (52', 52"), wherein the optical filters (52', 52") are configured to selectively transmit fluorescence emissions at different wavelengths.

10. The optical system of any preceding claim, wherein the fiber optic cable (41) is single-mode or multi-mode, has a core diameter between 10 µm and 2000 µm, a numerical aperture between 0.1 and 0.5, and a transmission bandwidth between 250 nm and 2000 nm.

## Amended claims

### Amended claims in accordance with Rule 137(2) EPC.

1. An optical system for a fluorescence imager, comprising: (i) a laser source (1) configured to generate a collimated excitation laser beam; (ii) a beam splitter (2) configured to receive the excitation laser beam and divide it into two substantially equal beams: one and two; (iii) a receiving structure (3") configured to accommodate a target vessel (3) configured to hold a target (3') containing fluorophores; (iv) two substantially identical excitation systems (4' and 4"); (v) an imaging system (5) configured to capture fluorescence emission from the target vessel (3), the imaging system (5) comprising: (va) an aperture (51); (vb) one or more optical filters (52' and 52") configured to attenuate excitation light, the filters (52' and 52") having the same physical dimensions and optical properties; (vc) an imaging lens (53); and (vd) a photosensor (54) configured to capture fluorescence light emitted from the target (3'); **characterized in that** the excitation systems (4' and 4") are positioned symmetrically around the target vessel (3) on opposite lateral sides, ensuring uniform beam energy distribution across the target (3'), wherein each excitation system (4' and 4") comprising: (iva) a fiber optic cable (41) configured to transmit a focused beam; (ivb) a first half-ball lens (42) configured to focus the beam into the fiber optic cable (41), wherein the lens (42) is positioned at a predefined distance from the fiber optic cable (41); (ivc) a second half-ball lens (43) configured to recollimate the beam one upon exiting the fiber optic cable (41), wherein the lens (43) is positioned at substantially the same distance from the fiber optic cable (41) as the first half-ball lens (42); and (ivd) a mirror (45) positioned at an angle X to direct the recollimated beam towards the target vessel (3) containing the target (3'); wherein the mirror (45) is positioned to reflect the beam at a total angle of approximately 2X;
and the optical filters (52' and 52") are positioned on opposite sides of the imaging lens (53).

2. The optical system of claim 1, wherein the laser source (1) comprises two or more lasers (10) configured to emit excitation laser beams at different wavelengths, wherein the lasers (10) are positioned such that their emitted beams are directed along intersecting optical paths and are subsequently merged by an optical combining element (46) into a single multi-wavelength excitation beam before entering the beam splitter (2).

3. The optical system of claim 2, wherein the laser source (1) configured to emit excitation laser beams at wavelengths in the ranges of approximately 400-700 nm, including green wavelengths from 520 to 560 nm, red wavelengths from 620 to 750 nm, blue wavelengths from 450 to 495 nm, violet wavelengths from 400 to 450 nm, and ultraviolet wavelengths from 300 to 400 nm, with a power not exceeding 3 W per beam.

4. The optical system of any preceding claims, wherein the angle X is between 15° and 40°, resulting in a total reflection angle of 30° to 80°.

5. The optical system of any preceding claim, wherein each excitation system (4' and 4") is configured to produce a uniformly illuminated circular spot with substantially equal intensity across its surface, the spot increasing in diameter with distance from the second half-ball lens (43).

6. The optical system of any preceding claims, wherein the aperture (51) has a diameter between 4 mm and 8 mm; and the optical filter (52' and 52") are single or multi-bandpass filters with a diameter between 7 mm and 15 mm.

7. The optical system of any of the preceding claims, wherein the imaging system (5) comprises an adjustment mechanism (60) that allows movement of the imaging lens (53) and/or the photosensor (54) along the linear axis Z, which substantially perpendicular to the plane of the target vessel (3).

8. The optical system of any preceding claims, wherein the photosensor (54) comprises a CMOS or a CCD matrix.

9. The optical system of any preceding claims, wherein the imaging system (5) comprises a filter mounting mechanism (55) for interchangeable optical filters (52', 52"), wherein the optical filters (52', 52") are configured to selectively transmit fluorescence emissions at different wavelengths.

10. The optical system of any preceding claim, wherein the fiber optic cable (41) is single-mode or multi-mode, has a core diameter between 10 µm and 2000 µm, a numerical aperture between 0.1 and 0.5, and a transmission bandwidth between 250 nm and 2000 nm.
